# EUROPEAN PATENT APPLICATION

(11) **EP 4 842 016 A1**
(43) Date of publication of application: **18.11.2026**
(21) Application number: 24917218.0
(22) Date of filing: 11.01.2024
(51) Int. Cl.: H04W 4/06, H04W 16/26, H04W 88/04

(54) **COMMUNICATION SYSTEM, MOBILE TERMINAL, PROGRAM, AND COMMUNICATION METHOD**

(71) Applicant: Mitsubishi Electric Corporation, Tokyo 100-8310 (JP)
(72) Inventor: IWAYAMA Naofumi, Tokyo 100-8310 (JP); HASEGAWA Fumiki, Tokyo 100-8310 (JP); MAKINO Shinya, Tokyo 100-8310 (JP); INOUE Noriaki, Tokyo 100-8310 (JP); SATO Kazuya, Tokyo 100-8310 (JP)
(74) Representative: Witte, Weller & Partner Patentanwälte mbB
(86) International application number: PCT/JP2024/000457
(87) International publication number: WO 2025/150154

(57) **Abstract**

A communication system (100) includes a base station (130), a relay UE (110A), and a remote UE (110B). When the relay UE (110A) is present within a range in which communication with the base station (130) can be performed, the relay UE (110A) receives MBS data being data of an MBS from the base station (130), and extracts TMGI information included in the MBS data. When the remote UE (110B) is present within a range in which communication with the base station (130) cannot be performed and communication with the relay UE (110A) can be performed, the remote UE (110B) acquires the TMGI information from the relay UE (110A), and receives provision of the MBS from the base station (130) by using a relay function of the relay UE (110A). When the relay UE (110A) does not receive the MBS data for a predetermined period, the relay UE (110A) terminates a relay of the MBS.

## Description

### Technical Field

The present disclosure relates to a communication system, a mobile terminal, a program, and a communication method.

### Background

In the 3rd Generation Partnership Project (3GPP) being a standardization organization for a mobile communication system, it is studied to support services using side link (SL) communication (also referred to as PC5 communication) in both of an evolved packet system (EPS) and a 5th generation (5G) core system. Note that the services may be provided in an application.

In SL communication, communication is performed between user equipments (UEs) as communication terminals or mobile terminals. Examples of the services using SL communication include, for example, a vehicle-to-everything (V2X) service, a proximity service, and the like.

In SL communication, not only direct communication between UEs but also communication between a UE and a network (NW) via a relay is proposed. A UE having a relay function being a function of performing the relay is hereinafter referred to as a UE-to-network relay or a U2N relay.

In order to extend coverage of a cell by using SL communication, 3GPP defines a function of the U2N relay that provides another UE being present out of the coverage of the cell with relay connection to a 5G network via SL communication (for example, see NPL 1). 3GPP also defines a relay method for a multimedia broadcast and multicast service (MBMS). Although 3GPP newly defines a multicast and broadcast service (MBS) instead of the MBMS in 5G, it is considered that the relay scheme for the MBMS can also be applied to the MBS.

Here, in NPL 1, a UE that is present out of coverage of a base station and receives an MBMS requires a procedure of once establishing unicast communication with the base station via a U2N relay and recognizing a desired MBMS.

### Citation List

### Non Patent Literature

[NPL 1] 3GPP TS 23.303 V17.1.0

### SUMMARY

### Technical Problem

However, when the functions of the UE are limited such as in a case in which the UE is an Internet of things (IoT) device, and a user does not require unicast communication with the base station but desires to receive only an MBMS or an MBS, the relay scheme requires an unnecessary procedure, takes time until the MBMS or the MBS is received, and also increases consumption of a battery of the UE.

In view of this, one or a plurality of aspects of the present disclosure have one object to enable a UE to receive an MBS without performing unicast communication with a base station. Solution to Problem

A communication system according to an aspect of the present disclosure includes a base station, a first mobile terminal, and a second mobile terminal. The first mobile terminal is configured to, when the first mobile terminal is present within a range in which communication with the base station can be performed, receive multicast and broadcast service (MBS) data being data of an MBS from the base station, and extract temporary mobile group identity (TMGI) information included in the MBS data. The second mobile terminal is configured to, when the second mobile terminal is present within a range in which communication with the base station cannot be performed and communication with the first mobile terminal can be performed, acquire the TMGI information from the first mobile terminal, and receive provision of the MBS from the base station by using a relay function of the first mobile terminal. The first mobile terminal is configured to, when the first mobile terminal does not receive the MBS data for a predetermined period, terminate a relay of the MBS.

A mobile terminal according to an aspect of the present disclosure includes a communication unit configured to, when being present within a range in which communication with a base station can be performed, receive multicast and broadcast service (MBS) data being data of an MBS from the base station; and a control unit configured to extract temporary mobile group identity (TMGI) information included in the MBS data, add the TMGI information to a message of side link (SL) communication and cause the communication unit to transmit the message, and when the MBS data is not received for a predetermined period, terminate a relay of the MBS.

A program according to an aspect of the present disclosure causes a computer to function as a communication unit that, when being present within a range in which communication with a base station can be performed, receives multicast and broadcast service (MBS) data being data of an MBS from the base station; and a control unit that extracts temporary mobile group identity (TMGI) information included in the MBS data, add the TMGI information to a message of side link (SL) communication and causes the communication unit to transmit the message, and when the MBS data is not received for a predetermined period, terminates a relay of the MBS.

A communication method according to an aspect of the present disclosure includes, when being present within a range in which communication with a base station can be performed, receiving multicast and broadcast service (MBS) data being data of an MBS from the base station; extracting temporary mobile group identity (TMGI) information included in the MBS data, and adding the TMGI information to a message of side link (SL) communication to transmit the message; and when the MBS data is not received for a predetermined period, terminating a relay of the MBS.

### Advantageous Effects of Invention

According to one or a plurality of aspects of the present disclosure, the UE can receive the MBS without performing unicast communication with the base station.

### BRIEF DESCRIPTION OF THE DRAWINGS

Fig. 1 is a block diagram schematically illustrating a configuration of a communication system according to first and second embodiments;
Fig. 2 is a block diagram schematically illustrating a configuration of a UE according to the first and second embodiments;
Figs. 3A and 3B are each a block diagram illustrating a hardware configuration example;
Fig. 4 is a block diagram schematically illustrating a configuration of a base station according to the first and second embodiments;
Fig. 5 is a block diagram schematically illustrating a configuration of an upper apparatus according to the first and second embodiments;
Fig. 6 is a sequence diagram illustrating a procedure for relaying an MBS to the UE in the communication system according to the first embodiment;
Fig. 7 is a schematic diagram illustrating a deployment example of a relay UE, a remote UE, and a base station 130 according to the first embodiment;
Fig. 8 is a sequence diagram illustrating a procedure for relaying an MBS to the UE by multi-hop relaying in the communication system according to the second embodiment; and
Fig. 9 is a schematic diagram illustrating a deployment example of a first relay UE, a second relay UE, a remote UE, and a base station according to the second embodiment.

### DETAILED DESCRIPTION

### First Embodiment

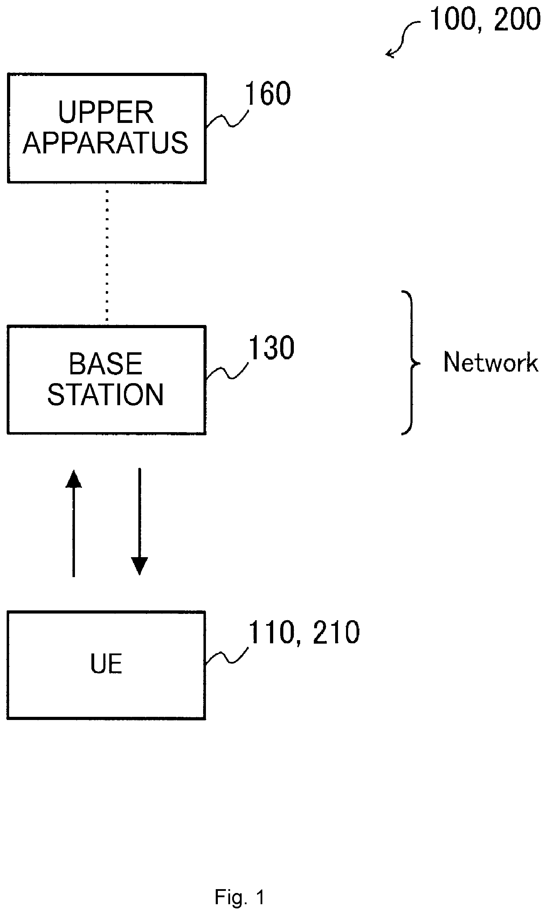

Fig. 1 is a block diagram schematically illustrating a configuration of a communication system 100 according to a first embodiment. The communication system 100 includes a UE 110 as a mobile terminal, a base station 130 as a base station apparatus, and an upper apparatus 160.

The UE 110 can perform radio communication with the base station 130, and performs transmission and reception of signals by radio communication. The UE 110 can also perform communication between UEs 110 by SL communication, and can also perform communication via a relay.

The base station 130 constitutes a radio access network. Here, although description will be given based on the assumption that the radio access network is a fifth generation (hereinafter also referred to as "5G") radio access system, such an example is not restrictive.

When the radio access network employs a 5G scheme discussed in 3GPP, the radio access network is referred to as a next generation radio access network (NG-RAN). In this case, the base station 130 is referred to as an NG-RAN NodeB (gNB). A core network is referred to as a 5G core. Note that, when the radio access network employs an LTE scheme discussed in 3GPP, the radio access network is referred to as an evolved universal terrestrial radio access network (E-UTRAN). In this case, the base station 130 is referred to as an E-UTRAN NodeB (eNB).

A system including an evolved packet core (EPC) being a core network and an E-UTRAN being a radio access network is referred to as an evolved packet system (EPS). The EPC being a core network and the E-UTRAN being a radio access network may be collectively referred to as a "network".

The base station 130 is connected to the upper apparatus 160 functioning as a mobility management entity (MME), a serving gateway (S-GW), or an MME/S-GW part including the MME and the S-GW via an S1 interface, and control information is communicated between the base station 130 and the upper apparatus 160.

A plurality of upper apparatuses 160 may be connected to one base station 130. A plurality of base stations 130 are connected via an X2 interface, and control information is communicated between the plurality of base stations 130.

The upper apparatus 160 is specifically an upper node, and controls connection between the base station 130 and the UE 110. The upper apparatus 160 constitutes the EPC being a core network.

The base station 130 may constitute one cell, or may constitute a plurality of cells. Each cell has a predetermined range as coverage being a range in which communication with the UE 110 can be performed, and performs radio communication with the UE 110 within the coverage. When one base station 130 constitutes a plurality of cells, each of the cells is configured to be capable of communicating with the UE 110.

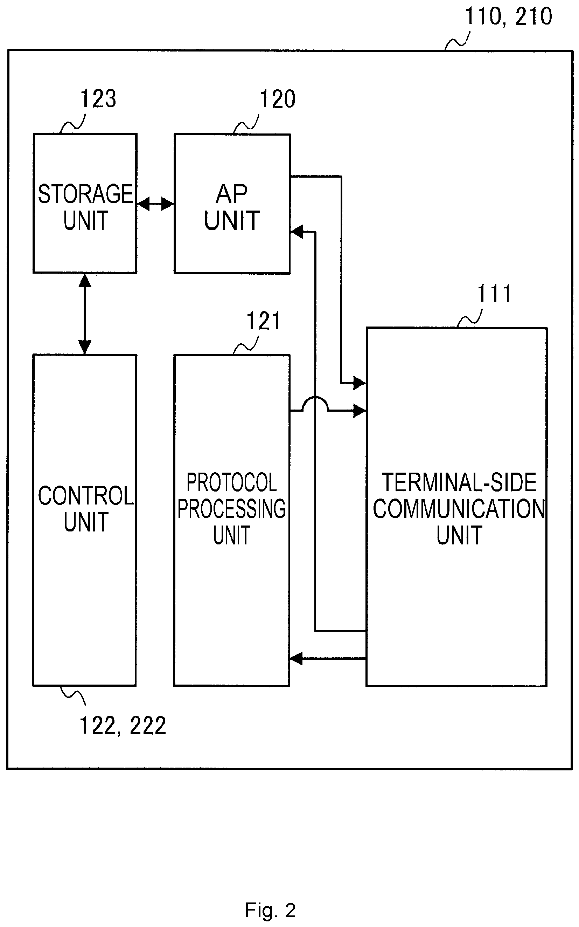

Fig. 2 is a block diagram schematically illustrating a configuration of the UE 110. The UE 110 includes a terminal-side communication unit 111, an application unit (hereinafter referred to as an AP unit) 120, a protocol processing unit 121, a control unit 122, and a storage unit 123.

First, transmission processing of the UE 110 will be described. Control data from the protocol processing unit 121 or user data from the AP unit 120 is provided to the terminal-side communication unit 111.

The terminal-side communication unit 111 converts the data into a transmit signal to be wirelessly communicated, and transmits the transmit signal to a destination via one or a plurality of antennas.

Next, reception processing of the UE 110 will be described. The terminal-side communication unit 111 receives a radio signal from a transmission source via one or a plurality of antennas as a received signal, and generates control data or user data from the received signal. Then, the terminal-side communication unit 111 transmits the control data to the protocol processing unit 121, and transmits the user data to the AP unit 120.

The series of processing in the UE 110 as described above is controlled by the control unit 122. Although not illustrated, the control unit 122 is connected to the terminal-side communication unit 111, the AP unit 120, and the protocol processing unit 121. Note that the number of antennas used by the UE 110 for transmission and the number of antennas used for reception may be the same or may be different.

The storage unit 123 stores a program and data necessary for processing in the UE 110.

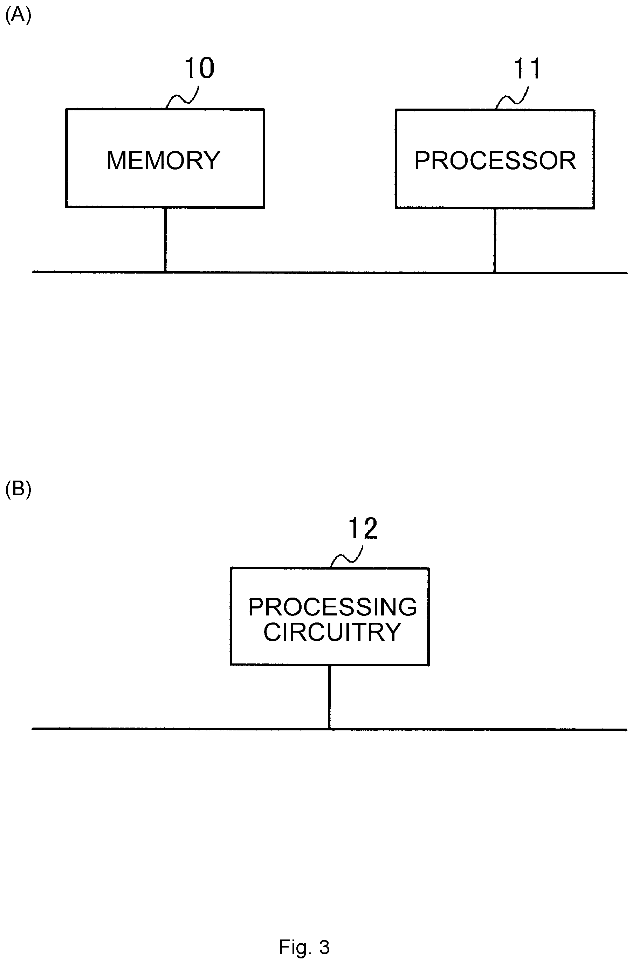

For example, as illustrated in Fig. 3A, a part or all of the AP unit 120, the protocol processing unit 121, and the control unit 122 described above can be configured by a memory 10 and a processor 11 such as a central processing unit (CPU) that executes a program stored in the memory 10. Such a program may be provided via a network, or may be provided by being recorded in a recording medium. In other words, such a program may be provided as a program product, for example. In other words, the UE 110 can be implemented by a computer including the processor 11 and the memory 10.

For example, as illustrated in Fig. 3B, a part or all of the AP unit 120, the protocol processing unit 121, and the control unit 122 can also be configured by processing circuitry 12 such as a single circuit, a combined circuit, a processor that operates by a program, a parallel processor that operates by a program, an application specific integrated circuit (ASIC), or a field programmable gate array (FPGA). As described above, the AP unit 120, the protocol processing unit 121, and the control unit 122 can be implemented by a processing circuit network.

Note that the terminal-side communication unit 111 can be implemented by a radio communication interface being an interface for radio communication. The storage unit 123 can be implemented by a non-volatile memory, or a storage apparatus such as a hard disk drive (HDD) or a solid state drive (SSD).

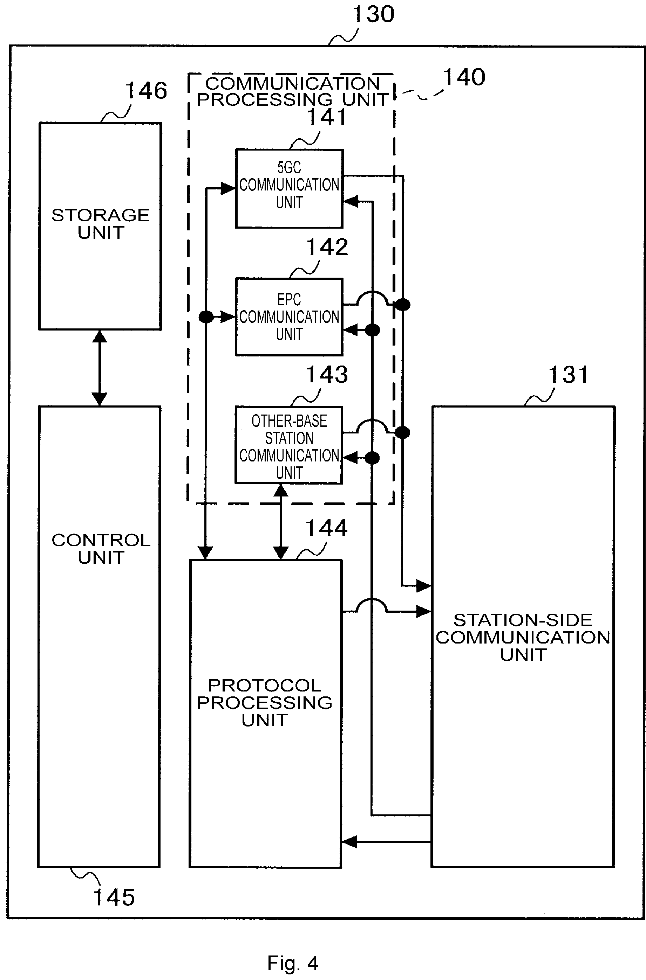

Fig. 4 is a block diagram schematically illustrating a configuration of the base station 130. The base station 130 includes a station-side communication unit 131, a communication processing unit 140, a protocol processing unit 144, a control unit 145, and a storage unit 146. The communication processing unit 140 includes a 5GC communication unit 141 that performs transmission and reception of data to and from the 5GC, an EPC communication unit 142 that performs transmission and reception of data to and from the evolved packet core (EPC) such as the mobility management entity (MME), and an other-base station communication unit 143 that performs transmission and reception of data to and from another base station. Note that each of the 5GC communication unit 141, the EPC communication unit 142, and the other-base station communication unit 143 exchanges information with the protocol processing unit 144.

First, transmission processing of the base station 130 will be described. Control data from the protocol processing unit 144, or user data or control data from the 5GC communication unit 141, the EPC communication unit 142, or the other-base station communication unit 143 is provided to the station-side communication unit 131.

The station-side communication unit 131 converts the data into a transmit signal to be wirelessly communicated, and transmits the transmit signal to a destination via one or a plurality of antennas.

Next, reception processing of the base station 130 will be described. The station-side communication unit 131 receives a radio signal from a transmission source via one or a plurality of antennas as a received signal, and generates control data or user data from the received signal. Then, the station-side communication unit 131 transmits the control data to the protocol processing unit 144, the 5GC communication unit 141, the EPC communication unit 142, or the other-base station communication unit 143, and transmits the user data to the 5GC communication unit 141, the EPC communication unit 142, or the other-base station communication unit 143.

The series of processing in the base station 130 as described above is controlled by the control unit 145. Although not illustrated, the control unit 145 is connected to the station-side communication unit 131, the communication processing unit 140, and the protocol processing unit 144. Note that the number of antennas used by the base station 130 for transmission and the number of antennas used for reception may be the same or may be different. The number of antennas of the UE 110 and the number of antennas of the base station 130 may be the same or may be different.

The storage unit 146 stores a program and data necessary for processing in the base station 130.

For example, as illustrated in Fig. 3A, a part or all of the communication processing unit 140, the protocol processing unit 144, and the control unit 145 described above can be configured by the memory 10 and the processor 11 such as a CPU that executes a program stored in the memory 10. Such a program may be provided via a network, or may be provided by being recorded in a recording medium. In other words, such a program may be provided as a program product, for example.

For example, as illustrated in Fig. 3B, a part or all of the communication processing unit 140, the protocol processing unit 144, and the control unit 145 can also be configured by the processing circuitry 12 such as a single circuit, a combined circuit, a processor that operates by a program, a parallel processor that operates by a program, an ASIC, or an FPGA. As described above, the communication processing unit 140, the protocol processing unit 144, and the control unit 145 can be implemented by a processing circuit network.

Note that the station-side communication unit 131 can be implemented by a radio communication interface being an interface for radio communication. The storage unit 126 can be implemented by a non-volatile memory, or a storage apparatus such as an HDD or an SSD.

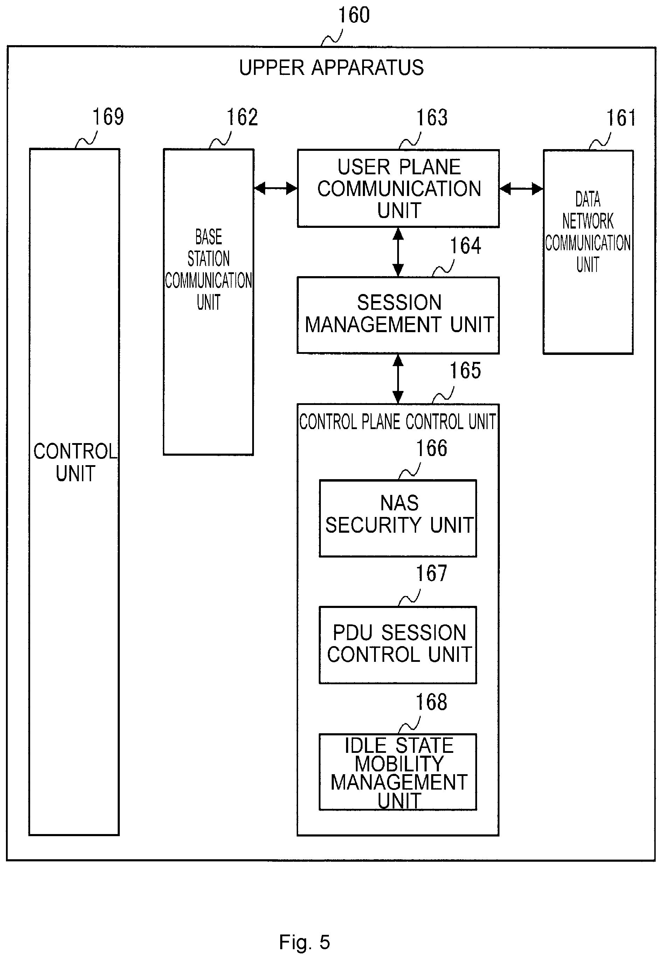

Fig. 5 is a block diagram schematically illustrating a configuration of the upper apparatus 160. In the present embodiment, the 5G scheme is used as the radio access network, and thus the upper apparatus 160 is also referred to as a 5G core (5GC) part.

Fig. 5 illustrates a case in which a configuration of an access and mobility management function (AMF), a configuration of a session management function (SMF), and a configuration of a user plane function (UPF) are included in the upper apparatus 160 illustrated in Fig. 1. The upper apparatus 160 includes a data network communication unit 161, a base station communication unit 162, a user plane communication unit 163, a session management unit 164, a control plane control unit 165, and a control unit 169.

The data network communication unit 161 performs transmission and reception of data between the upper apparatus 160 and a data network. The base station communication unit 162 performs transmission and reception of data between the upper apparatus 160 and the base station 130 via an NG interface. When the data received from the data network is user data, the user data is transmitted from the data network communication unit 161 to the base station communication unit 162 via the user plane communication unit 163, and is transmitted from the base station communication unit 162 to the base station 130. When the data from the base station 130 is user data, the user data is transmitted from the base station communication unit 162 to the data network communication unit 161 via the user plane communication unit 163, and is transmitted from the data network communication unit 161 to the data network.

When the data from the data network is control data, the control data is transmitted from the data network communication unit 161 to the session management unit 164 via the user plane communication unit 163. The session management unit 164 transmits the control data to the control plane control unit 165. When the data from the base station 130 is control data, the control data is transmitted from the base station communication unit 162 to the control plane control unit 165. The control plane control unit 165 transmits the control data to the session management unit 164.

The control plane control unit 165 performs overall processing for a control plane (which may be hereinafter referred to as a C-Plane). The control plane control unit 165 includes a non-access stratum (NAS) security unit 166, a PDU session control unit 167, and an idle state mobility management unit 168.

The NAS security unit 166 performs security of a NAS message and the like. The PDU session control unit 167 performs management of a PDU session between the UE 110 and the upper apparatus 160 and the like. The idle state mobility management unit 168 performs mobility management of an idle state, generation and control of a paging signal in an idle state, addition, deletion, update, and search of tracking area(s) of one or a plurality of UEs 110 served thereby, tracking area list management, and the like. Note that the idle state is also referred to as an RRC_IDLE state, or simply idle.

The series of processing of the upper apparatus 160 is controlled by the control unit 169. Although not illustrated, the control unit 169 is connected to the data network communication unit 161, the base station communication unit 162, the user plane communication unit 163, the session management unit 164, and the control plane control unit 165.

For example, as illustrated in Fig. 3A, a part or all of the data network communication unit 161, the base station communication unit 162, the user plane communication unit 163, the session management unit 164, the control plane control unit 165, and the control unit 169 can be configured by the memory 10 and the processor 11 such as a CPU that executes a program stored in the memory 10. Such a program may be provided via a network, or may be provided by being recorded in a recording medium. In other words, such a program may be provided as a program product, for example.

For example, as illustrated in Fig. 3B, a part or all of the data network communication unit 161, the base station communication unit 162, the user plane communication unit 163, the session management unit 164, the control plane control unit 165, and the control unit 169 can also be configured by the processing circuitry 12 such as a single circuit, a combined circuit, a processor that operates by a program, a parallel processor that operates by a program, an ASIC, or an FPGA. As described above, the data network communication unit 161, the base station communication unit 162, the user plane communication unit 163, the session management unit 164, and the control plane control unit 165 can be implemented by a circuit network.

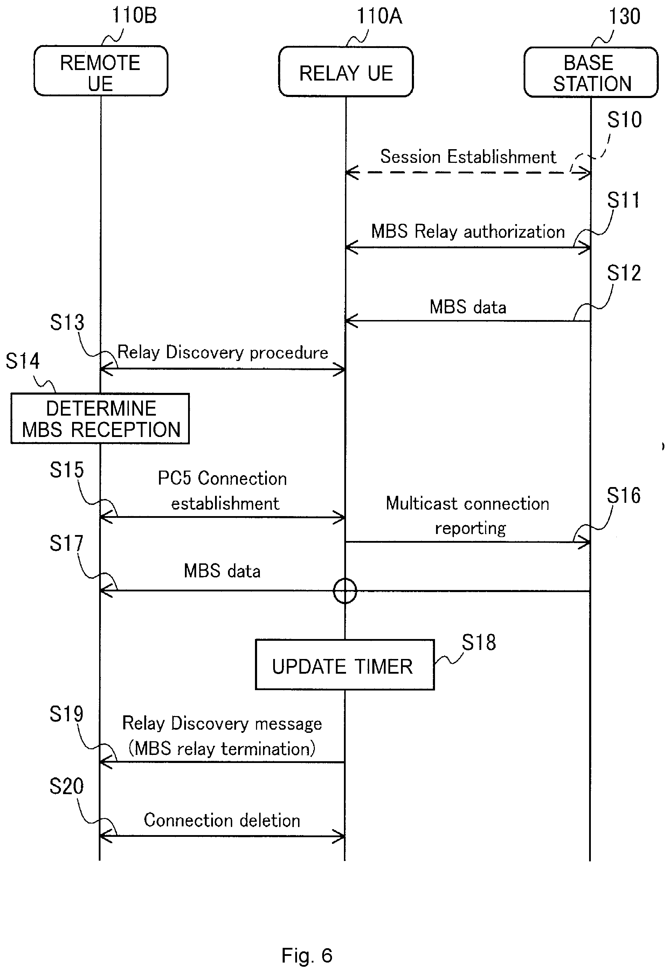

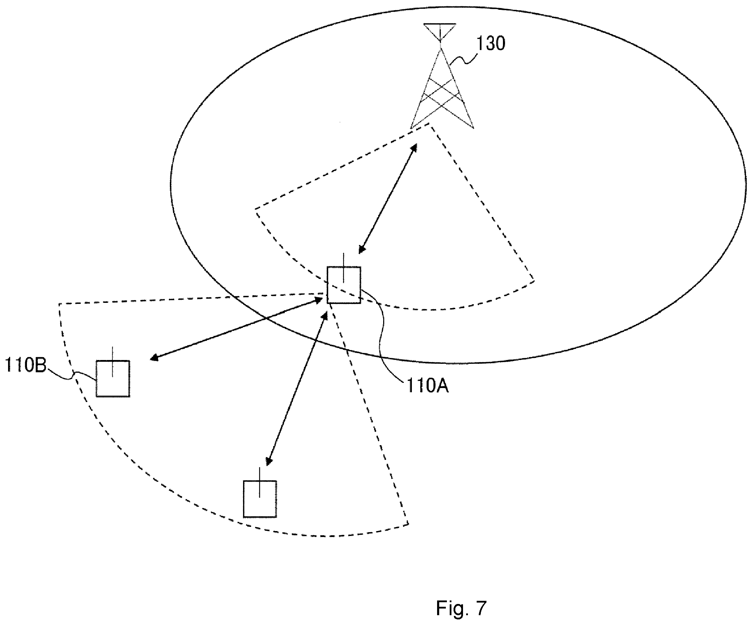

Fig. 6 is a sequence diagram illustrating a procedure for relaying an MBS to the UE 110 in the communication system 100 according to the first embodiment. The sequence diagram illustrated in Fig. 6 is a procedure in a situation as illustrated in Fig. 7. As illustrated in Fig. 7, here, a relay UE 110A functioning as a U2N relay being a UE 110 that provides relay connection to a 5G network via SL communication, a remote UE 110B being a UE 110 that desires to receive an MBS via the relay, and the base station 130 are present. Note that the relay UE 110A is also referred to as a first mobile terminal, and the remote UE 110B is also referred to as a second mobile terminal.

In Step S10, the control unit 122 of the relay UE 110A establishes communication with the base station 130 being a gNB via the protocol processing unit 121 and the terminal-side communication unit 111, and is in an RRC_CONNECTED state.

In Step S11, the control unit 122 of the relay UE 110A inquires of the base station 130 and the upper apparatus 160 being a core network whether or not a relay function for the MBS is available via the protocol processing unit 121 and the terminal-side communication unit 111. The control plane control unit 165 of the upper apparatus 160 notifies the relay UE 110A whether or not the relay function for the MBS is available via the session management unit 164, the user plane communication unit 163, and the base station communication unit 162. As conditions under which the relay function is unavailable, geographical conditions, relay prohibition due to restrictions of each service (application), or the like is considered. Here, description will be given based on the assumption that the relay function is available.

In Step S12, the relay function is available, and the control unit 122 of the relay UE 110A starts to receive MBS data via the protocol processing unit 121 and the terminal-side communication unit 111. When the control unit 122 of the relay UE 110A receives the MBS data, the control unit 122 extracts temporary mobile group identity (TMGI) information included in the MBS data, and stores the TMGI information in the storage unit 123 as a list of relayable MBSs. The control unit 122 of the relay UE 110A prepares a timer for the relay for each service of the MBS, and starts the timer upon reception of the MBS data. In Step S11, when receiving, from the base station 130, a notification of the list information of the MBSs permitted to be relayed, the control unit 122 of the relay UE 110A may use the list information as an initial value of the relayable MBS list.

In Step S13, the control unit 122 of the remote UE 110B searches for a connectable relay UE 110A according to a Discovery Procedure of SL communication via the protocol processing unit 121 and the terminal-side communication unit 111. The control unit 122 of the relay UE 110A adds, together with relay information, the TMGI information of the available MBSs acquired in advance in Step S12, to a Discovery message or a Discovery Solicitation message transmitted by the control unit 122.

In Step S14, the control unit 122 of the remote UE 110B analyzes the acquired TMGI information, and determines whether or not there is a desired MBS. Here, description will be given based on the assumption that there is a desired MBS.

In Step S15, in a case of a Multicast service, a session of Direct Connection is established between the remote UE 110B and the relay UE 110A. Here, the control unit 122 of the remote UE 110B and the control unit 122 of the relay UE 110A each perform communication via the protocol processing unit 121 and the terminal-side communication unit 111, and the session is thereby established. In a case of a Broadcast service as well, session establishment may be performed.

In Step S16, in a case of a Multicast service, the control unit 122 of the relay UE 110A notifies the base station 130 via the protocol processing unit 121 and the terminal-side communication unit that the remote UE 110B receives Multicast via the relay.

In Step S17, the control unit 145 of the base station 130 transmits the MBS data via the protocol processing unit 144 and the station-side communication unit 131. In a case of a service permitted to be relayed in Step S11, the control unit 122 of the relay UE 110A transfers the received MBS data to all the remote UEs 110B that desire the relay of the MBS data by SL communication via the protocol processing unit 121 and the terminal-side communication unit 111. The transfer method may be either unicast communication or groupcast communication.

In Step S18, the control unit 122 of the relay UE 110A resets the timer associated with the service of the received MBS.

In Step S19, when the timer reaches a certain threshold, the control unit 122 of the relay UE 110A considers that the corresponding service has terminated, and deletes the TMGI information in a Discovery message or a Discovery Solicitation message to be transmitted thereafter via the protocol processing unit 121 and the terminal-side communication unit 111. By receiving such an updated message, the control unit 122 of the remote UE 110B can recognize that the MBS data is not to be relayed. As described above, when the relay UE 110A does not receive the MBS data for a predetermined period, the relay UE 110A terminates the relay of the MBS.

Alternatively, the control unit 122 of the relay UE 110A may immediately broadcast the TMGI information to be terminated to surrounding UEs 110 by using groupcast of SL communication, instead of the Discovery message. The threshold for comparing the timer may be determined by the control unit 122 of the relay UE 110A, or may be determined by an instruction from the base station 130. The threshold may be uniform for all the services, or may be different for each service.

In Step S20, in a Multicast service, when the timer expires or the remote UE 110B terminates reception in Step S19, the control unit 122 of the relay UE 110A and the control unit 122 of the remote UE 110B release unnecessary Direct Connection and terminate the session.

Note that the control unit 122 of the remote UE 110B may position the location of the control unit 122 using the Global Navigation Satellite System (GNSS) or the like, and transmit location information indicating the positioned location to the relay UE 110A in Step S15. The control unit 122 of the relay UE 110A may transmit the received location information of the remote UE 110B to the base station 130 via the protocol processing unit 121 and the terminal-side communication unit 111 and inquire whether or not relaying can be performed, or may acquire map information of a relay-prohibited area from the base station 130 in Step S11, determine by itself whether or not relaying can be performed, and notify the remote UE 110B of the results. In this manner, relay control using the location information with higher accuracy can be performed. Note that the relay-prohibited area is a region in which the use of the relay function is prohibited.

A case is considered in which the provided MBS differs when the relay UE 110A moves out of coverage of the base station 130 and performs handover to another base station 130. When the remote UE 110B receives multicast, the remote UE 110B can acquire and recognize handover information by unicast communication with the relay UE 110A. However, in a case of broadcast, it is considered that the remote UE 110B does not have unicast communication with the relay UE 110A. It is considered that the relay UE 110A does not recognize which UE 110 receives relayed broadcast data. Such a problem as described above can be solved by the control unit 122 of the relay UE 110A broadcasting that handover is to be performed to the surroundings by using groupcast of SL communication and prompting a reset of receivable TMGI information held by the remote UE 110B. In this manner, a case in which the relay UE 110A performs handover can be coped with.

As described above, when the relay UE 110A is present within a range in which communication with the base station 130 can be performed, the relay UE 110A receives MBS data being data of the MBS from the base station 130, and extracts the TMGI information included in the MBS data. Then, when the remote UE 110B is present within a range in which communication with the base station 130 cannot be performed and communication with the relay UE 110A can be performed, the remote UE 110B acquires the TMGI information from the relay UE 110A, and receives provision of the MBS from the base station 130 by using the relay function of the relay UE 110A.

Note that the relay UE 110A may add the TMGI information to a message of SL communication and perform transmission thereof. As the message herein, either a Discovery message or a Discovery Solicitation message may be used.

The relay UE 110A may inquire of the base station 130 whether or not the relay function for the MBS is available, and when the relay function for the MBS is available, the relay UE 110A may receive the MBS data from the base station 130.

Note that the relay UE 110A starts measuring time when the relay UE 110A receives the MBS data, and stops the relay function for the MBS when the measured time reaches a predetermined threshold. When the relay UE 110A stops the relay function for the MBS, the relay UE 110A does not provide the TMGI information to the remote UE 110B.

The procedure described above can enable reception of the MBS data via the relay UE 110A without establishing (normal) unicast communication with the base station 130 from the remote UE 110B via the relay UE 110A, and can enable simplification of the remote UE 110B and reduction of power consumption.

Note that the remote UE 110B may transmit the location information indicating the location of the remote UE 110B to the relay UE 110A. In this manner, the relay UE 110A can notify the base station 130 of the location information, and inquire whether or not the relay function for the MBS is available. When the location indicated by the location information is not included in a range in which the use of the relay function for the MBS is prohibited, the base station 130 responds to the relay UE 110A that the relay function for the MBS is available. In this manner, whether or not relaying can be performed can be more accurately determined.

The remote UE 110B may transmit the location information indicating the location of the remote UE 110B to the relay UE 110A, and when the location indicated by the location information is not included in a range in which the use of the relay function for the MBS is prohibited, the relay UE 110A may relay the MBS data from the base station 130 to the remote UE 110B.

Note that, when the relay UE 110A performs handover to a neighboring base station (not illustrated) being a base station that neighbors the base station 130, the relay UE 110A transmits handover information indicating that the handover has been performed to the remote UE 110B by using a groupcast function of SL communication, thus enabling relaying of the MBS compatible with handover.

### Second Embodiment

It is considered that an MBS reach distance can be further extended by using a UE-to-UE relay (U2U relay) that relays inter-terminal direct communication studied in 3GPP, in addition to the features of the first embodiment. In a second embodiment, a configuration that enables such processing will be described.

As illustrated in Fig. 1, a communication system 200 according to the second embodiment includes a UE 210, a base station 130, and an upper apparatus 160. The base station 130 and the upper apparatus 160 of the communication system 200 according to the second embodiment are similar to the base station 130 and the upper apparatus 160 of the communication system 100 according to the first embodiment.

As illustrated in Fig. 2, the UE 210 according to the second embodiment includes a terminal-side communication unit 111, an AP unit 120, a protocol processing unit 121, a control unit 222, and a storage unit 123. The terminal-side communication unit 111, the AP unit 120, the protocol processing unit 121, and the storage unit 123 of the UE 210 according to the second embodiment are similar to the terminal-side communication unit 111, the AP unit 120, the protocol processing unit 121, and the storage unit 123 of the UE 110 according to the first embodiment.

The control unit 220 according to the second embodiment performs processing similar to that of the first embodiment, and performs processing for implementing the U2U relay that relays inter-terminal direct communication studied in 3GPP.

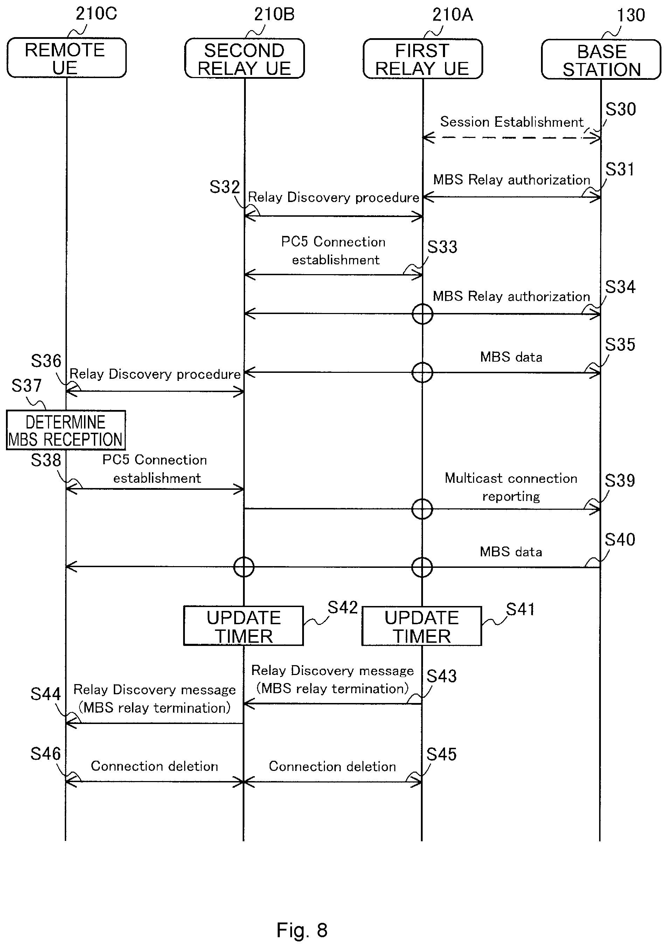

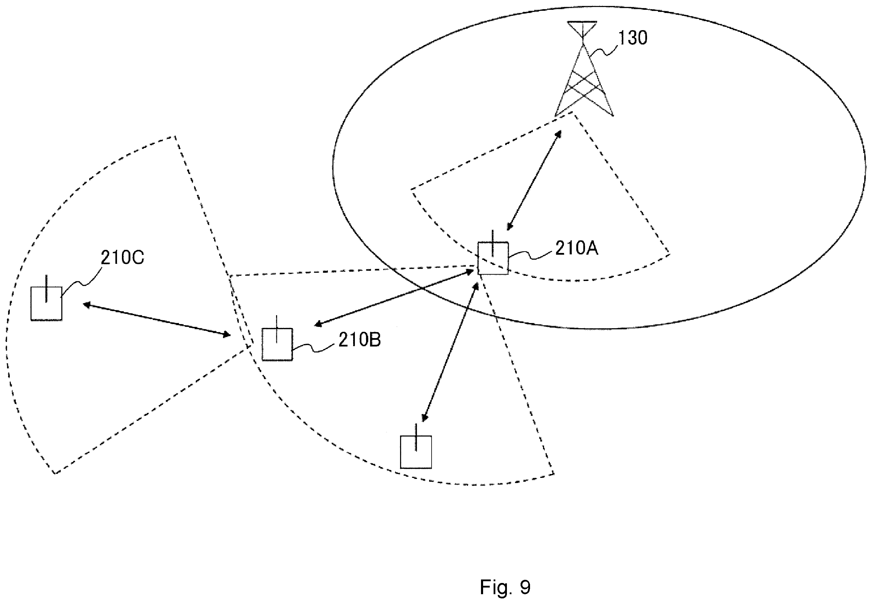

Fig. 8 is a sequence diagram illustrating a procedure for relaying an MBS to the UE 210 by multi-hop relaying in the communication system 200 according to the second embodiment. The sequence diagram illustrated in Fig. 8 is a procedure in a situation as illustrated in Fig. 9. As illustrated in Fig. 9, here, a first relay UE 210A functioning as a U2N relay being a UE 210 that provides relay connection to a 5G network via SL communication, a second relay UE 210B being a UE 210 functioning as a U2U relay that relays inter-terminal direct communication studied in 3GPP, a remote UE 210C being a UE 210 that desires to receive an MBS via the relay, and the base station 130 are present. Here, the first relay UE 210A is also referred to as a first mobile terminal, the second relay UE 210B is also referred to as a second mobile terminal, and the remote UE 210C is also referred to as a third mobile terminal.

In Step S30, the control unit 222 of the first relay UE 210A establishes communication with the base station 130 being a gNB via the protocol processing unit 121 and the terminal-side communication unit 111, and is in an RRC_CONNECTED state.

In Step S31, the control unit 222 of the first relay UE 210A inquires of the base station 130 and the upper apparatus 160 being a core network whether or not a relay function for the MBS is available via the protocol processing unit 121 and the terminal-side communication unit 111. The control plane control unit 165 of the upper apparatus 160 notifies the first relay UE 210A whether or not the relay function for the MBS is available via the session management unit 164, the user plane communication unit 163, and the base station communication unit 162. Here, description will be given based on the assumption that the relay function is available.

In Step S32, the control unit 222 of the second relay UE 210B searches for a U2N relay connected to the base station 130 via the protocol processing unit 121 and the terminal-side communication unit 111. Here, the first UE 210A is already connected to the base station 130, and functions as a U2N relay.

Thus, in Step S33, the control unit 222 of the second relay UE 210B establishes a communication session with the first relay UE 210A via the protocol processing unit 121 and the terminal-side communication unit 111.

In Step S34, the control unit 222 of the second relay UE 210B inquires of the base station 130 and the upper apparatus 160 being a core network whether or not the relay function for the MBS is available by receiving the relay of the first relay UE 210A via the protocol processing unit 121 and the terminal-side communication unit 111. The control plane control unit 165 of the upper apparatus 160 notifies the second relay UE 210B, via the first relay UE 210A, whether or not the relay function for the MBS is available via the session management unit 164, the user plane communication unit 163, and the base station communication unit 162. Here, description will be given based on the assumption that the relay function is available.

In Step S35, the relay function is available, and the control unit 222 of the first relay UE 210A starts to receive MBS data via the protocol processing unit 121 and the terminal-side communication unit 111. When the control unit 222 of the first relay UE 210A receives the MBS data, the control unit 222 extracts TMGI information included in the MBS data, and stores the TMGI information in the storage unit 123 as a list of relayable MBSs. The control unit 222 of the first relay UE 110A prepares a timer for the relay for each service of the MBS, and starts the timer upon reception of the MBS data. The control unit 222 of the second relay UE 210B starts to receive the MBS data by receiving the relay of the first relay UE 210A via the protocol processing unit 121 and the terminal-side communication unit 111. Note that, for a relay method between the first relay UE 210A and the second relay UE 210B, groupcast from the first relay UE 210A may be used, or unicast may be used as unicast communication is established. When the control unit 222 of the second relay UE 210B receives the MBS data, the control unit 222 extracts the TMGI information included in the MBS data, and stores the TMGI information in the storage unit 123 as a list of relayable MBSs. The control unit 222 of the second relay UE 210B prepares a timer for the relay for each service of the MBS, and starts the timer upon reception of the MBS data.

In Step S36, the control unit 222 of the remote UE 210C searches for a connectable relay UE according to a Discovery Procedure of SL communication via the protocol processing unit 121 and the terminal-side communication unit 111. Here, description will be given based on the assumption that the second relay UE 210B is connectable. The control unit 222 of the second relay UE 210B adds, together with relay information, the TMGI information of the available MBSs acquired in advance in Step S35, to a Discovery message or a Discovery Solicitation message transmitted by the control unit 222.

In Step S37, the control unit 222 of the remote UE 210C analyzes the acquired TMGI information, and determines whether or not there is a desired MBS. Here, description will be given based on the assumption that there is a desired MBS.

In Step S38, in a case of a Multicast service, a session of Direct Connection is established between the remote UE 210C and the second relay UE 210B. Here, the control unit 222 of the remote UE 210C and the control unit 222 of the second relay UE 210B each perform communication via the protocol processing unit 121 and the terminal-side communication unit 111, and the session is thereby established. In a case of a Broadcast service as well, session establishment may be performed.

In Step S39, in a case of a Multicast service, the control unit 222 of the second relay UE 210B notifies the base station 130 via the protocol processing unit 121 and the terminal-side communication unit that the remote UE 210C receives Multicast via the relay.

In Step S40, the control unit 145 of the base station 130 transmits the MBS data via the protocol processing unit 144 and the station-side communication unit 131. In a case of a service permitted to be relayed in Step S31, the control unit 222 of the first relay UE 210A transfers the received MBS data to all the UEs 210 that desire the relay of the MBS data by SL communication via the protocol processing unit 121 and the terminal-side communication unit 111. Here, the MBS data is transferred to the second relay UE 210B. The transfer method may be either unicast communication or groupcast communication. In a case of a service permitted to be relayed in Step S34, the control unit 222 of the second relay UE 210B transfers the received MBS data to all the UEs 210 that desire the relay of the MBS data by SL communication via the protocol processing unit 121 and the terminal-side communication unit 111. Here, the MBS data is transferred to the remote UE 210C. The transfer method may be either unicast communication or groupcast communication.

In Step S41, the control unit 222 of the first relay UE 210A resets the timer associated with the service of the received MBS. In Step S42, the control unit 222 of the second relay UE 210B resets the timer associated with the service of the received MBS.

In Step S43, when the timer reaches a certain threshold, the control unit 222 of the first relay UE 210A considers that the corresponding service has terminated, and deletes the TMGI information in a Discovery message or a Discovery Solicitation message to be transmitted thereafter via the protocol processing unit 121 and the terminal-side communication unit 111. By receiving such an updated Discovery message, the control unit 222 of the second relay UE 210B can recognize that the MBS data is not to be relayed. As described above, when the first relay UE 210A does not receive the MBS data for a predetermined period, the first relay UE 210A terminates the relay of the MBS.

Alternatively, the control unit 222 of the first relay UE 210A may immediately broadcast the TMGI information to be terminated to surrounding UEs 210 by using groupcast of SL communication, instead of the Discovery message. The threshold for comparing the timer may be determined by the control unit 222 of the first relay UE 210A, or may be determined by an instruction from the base station 130. The threshold may be uniform for all the services, or may be different for each service.

In Step S44, when the timer reaches a certain threshold, the control unit 222 of the second relay UE 210B considers that the corresponding service has terminated, and deletes the TMGI information in a Discovery message or a Discovery Solicitation message to be transmitted thereafter via the protocol processing unit 121 and the terminal-side communication unit 111. By receiving such an updated Discovery message, the control unit 222 of the remote UE 210C can recognize that the MBS data is not to be relayed. When the second relay UE 210B does not receive the MBS data for a predetermined period, the second relay UE 210B also terminates the relay of the MBS.

Alternatively, the control unit 222 of the second relay UE 210B may immediately broadcast the TMGI information to be terminated to surrounding UEs 210 by using groupcast of SL communication, instead of the Discovery message. The threshold for comparing the timer may be determined by the control unit 222 of the second relay UE 210B, or may be determined by an instruction from the base station 130. The threshold may be uniform for all the services, or may be different for each service.

In Step S45, in a Multicast service, when the timer expires or the second relay UE 210B terminates reception in Step S41, the control unit 222 of the first relay UE 210A and the control unit 222 of the second relay UE 210B release unnecessary Direct Connection and terminate the session.

In Step S46, in a Multicast service, when the timer expires or the remote UE 210C terminates reception in Step S42, the control unit 222 of the second relay UE 210B and the control unit 222 of the remote UE 210B release unnecessary Direct Connection and terminate the session.

The second embodiment has a feature in that the number of sessions is one between the first relay UE 210A and the second relay UE 210B, regardless of the number of UEs 210 functioning as the remote UEs 210C connected to the U2U relay. This is implemented by a point-to-multi (PTM) communication scheme in which MBS data is copied in a U2U relay to be relayed and transmitted, and is effective for preventing an increase in the amount of communication data and securing scalability particularly in SL communication with a limited communication band. Note that connection between the remote UE 210 and the relay UE 210 may be either Multicast or Broadcast.

As described above, when the remote UE 210C is present within a range in which communication with the base station 130 and the first relay UE 210A cannot be performed and communication with the second relay UE 210B can be performed, the remote UE 210C acquires the TMGI information from the second relay UE 210B, and receives provision of the MBS from the base station 130 by using the relay function of the second relay UE 210B and the relay function of the first relay UE 210A.

Here, the second relay UE 210B uses the PTM communication scheme of copying the MBS data from the first relay UE 210A and relaying the copied MBS data to the remote UE 210C, and can thus have the number of sessions between relay apparatuses only one.

As illustrated in the procedure described above, by extracting the MBS data in the U2U relay and the TMGI information in each of the U2U relays and adding them to its own Discovery message for broadcast, the MBS can be relayed by the multi-hop relay scheme.

### Reference Signs List

- 100, 200: Communication System
- 110, 210: UE
- 111: Terminal-Side Communication Unit
- 120: AP Unit
- 121: Protocol Processing Unit
- 122, 222: Control Unit
- 123: Storage Unit
- 130: Base Station
- 131: Station-Side Communication Unit
- 140: Communication Processing Unit
- 144: Protocol Processing Unit
- 145: Control Unit
- 146: Storage Unit
- 160: Upper Apparatus
- 161: Data Network Communication Unit
- 162: Base Station Communication Unit
- 163: User Plane Communication Unit
- 164: Session Management Unit
- 165: Control Plane Control Unit
- 169: Control Unit

## Claims

1. A communication system comprising:
a base station;
a first mobile terminal; and
a second mobile terminal, wherein
the first mobile terminal is configured to, when the first mobile terminal is present within a range in which communication with the base station can be performed, receive multicast and broadcast service (MBS) data being data of an MBS from the base station, and extract temporary mobile group identity (TMGI) information included in the MBS data,
the second mobile terminal is configured to, when the second mobile terminal is present within a range in which communication with the base station cannot be performed and communication with the first mobile terminal can be performed, acquire the TMGI information from the first mobile terminal, and receive provision of the MBS from the base station by using a relay function of the first mobile terminal, and
the first mobile terminal is configured to, when the first mobile terminal does not receive the MBS data for a predetermined period, terminate a relay of the MBS.

2. The communication system according to claim 1, wherein
the first mobile terminal is configured to add the TMGI information to a message of side link (SL) communication to transmit the message.

3. The communication system according to claim 2, wherein
the message is a Discovery message or a Discovery Solicitation message.

4. The communication system according to any one of claims 1 to 3, wherein
the first mobile terminal is configured to inquire of the base station whether or not a relay function for the MBS is available, and
the first mobile terminal is configured to, when the relay function for the MBS is available, receive the MBS data from the base station.

5. The communication system according to claim 4, wherein
the second mobile terminal is configured to transmit location information indicating a location of the second mobile terminal to the first mobile terminal,
the first mobile terminal is configured to notify the base station of the location information, and inquire whether or not the relay function for the MBS is available, and
the base station is configured to, when the location indicated by the location information is not included in a range in which use of the relay function for the MBS is prohibited, respond to the first mobile terminal that the relay function for the MBS is available.

6. The communication system according to claim 4, wherein
the second mobile terminal is configured to transmit location information indicating a location of the second mobile terminal to the first mobile terminal, and
when the location indicated by the location information is not included in a range in which use of the relay function for the MBS is prohibited, the first mobile terminal is configured to relay the MBS data from the base station to the second mobile terminal.

7. The communication system according to any one of claims 1 to 6, wherein
the first mobile terminal is configured to start measuring time when the first mobile terminal receives the MBS data, and stop the relay function for the MBS when the measured time reaches a predetermined threshold.

8. The communication system according to claim 7, wherein
the first mobile terminal is configured, when the first mobile terminal stops the relay function for the MBS, not to provide the TMGI information to the second mobile terminal.

9. The communication system according to any one of claims 1 to 8, further comprising
a neighboring base station being a base station that neighbors the base station, wherein
the first mobile terminal is configured to, when the first mobile terminal performs handover to the neighboring base station, transmit handover information indicating that the handover has been performed, to the second mobile terminal by using a groupcast function of SL communication.

10. The communication system according to any one of claims 1 to 9, further comprising
a third mobile terminal, wherein
the third mobile terminal is configured to, when the third mobile terminal is present within a range in which communication with the base station and the first mobile terminal cannot be performed and communication with the second mobile terminal can be performed, acquire the TMGI information from the second mobile terminal, and receive provision of the MBS from the base station by using the relay function of the second mobile terminal and the relay function of the first mobile terminal.

11. The communication system according to claim 10, wherein
the third mobile terminal is configured to terminate the relay of the MBS when the third mobile terminal does not receive the MBS data for a predetermined period.

12. The communication system according to claim 10 or 11, wherein
the second mobile terminal is configured to use a point-to-multi (PTM) communication scheme in which the second mobile terminal copies the MBS data from the first mobile terminal and relays the copied MBS data to the third mobile terminal.

13. A mobile terminal comprising:
a communication unit configured to, when being present within a range in which communication with a base station can be performed, receive multicast and broadcast service (MBS) data being data of an MBS from the base station; and
a control unit configured to extract temporary mobile group identity (TMGI) information included in the MBS data, add the TMGI information to a message of side link (SL) communication and cause the communication unit to transmit the message, and when the MBS data is not received for a predetermined period, terminate a relay of the MBS.

14. A program causing a computer to function as:
a communication unit that, when being present within a range in which communication with a base station can be performed, receives multicast and broadcast service (MBS) data being data of an MBS from the base station; and
a control unit that extracts temporary mobile group identity (TMGI) information included in the MBS data, add the TMGI information to a message of side link (SL) communication and causes the communication unit to transmit the message, and when the MBS data is not received for a predetermined period, terminates a relay of the MBS.

15. A communication method comprising:
when being present within a range in which communication with a base station can be performed, receiving multicast and broadcast service (MBS) data being data of an MBS from the base station;
extracting temporary mobile group identity (TMGI) information included in the MBS data, and adding the TMGI information to a message of side link (SL) communication to transmit the message; and
when the MBS data is not received for a predetermined period, terminating a relay of the MBS.
